# EUROPEAN PATENT SPECIFICATION

(11) **EP 3 055 911 B1**
(45) Date of publication and mention of the grant of the patent: **04.12.2019**
(21) Application number: 14852228.7
(22) Date of filing: 06.10.2014
(51) Int. Cl.: H02G 1/10, G01C 21/00, G01S 19/00, B63G 8/00, B63B 35/04, B63G 8/08, B63H 15/00, G01S 5/18

(54) **UNDER WATER DEVICE**
UNTERWASSERVORRICHTUNG
DISPOSITIF SOUS-MARIN

(30) Priority: 08.10.2013 SE 1300634
(43) Date of publication of application: 17.08.2016
(73) Proprietor: ACC Group, 597 91 Åtvidaberg (SE)
(72) Inventor: LJUNG, Anders, S-383 38 Mönsterås (SE)
(74) Representative: Zacco Sweden AB
(86) International application number: PCT/SE2014/051157
(87) International publication number: WO 2015/053691

(56) References cited:
- WO-A2-89/07071
- WO-A2-2010/105003
- GB-A- 2 444 604
- US-A- 4 933 917
- US-A- 5 203 646
- US-A1- 2009 217 946
- US-A1- 2010 049 436
- US-A1- 2011 255 366

## Description

The present invention relates to positioning determination of underwater operations according to claim 1.

### BACKGROUND

When laying out cables at deep sea, it is important to determine the position of the cable in an exact manner. The cable is generally loaded onto a ship and then laid out on the bottom of the sea. The cable can for example be an electric cable or a communication cable for telecommunication, internet communication or the like. As the sea can be deep and in many cases be thousands of meters deep, it can be difficult to determine exactly where the cable is positioned after being laid out. In particular it is important to know where the cable is for maintenance reasons. As the boat is so far away from the bottom of the sea the position of the boat is not corresponding to the position of the cable on the bottom. The important point to have knowledge about is the touchdown point, i.e. the point where the cable during laying out touches the bottom.

Today this position is determined by means of submerged vehicles. These vehicles are of two kinds, one being energised and controlled by a long dedicated cable. And the other type that is independent and driven like a mini submarine energised by batteries. Both these types are movable by means of propellers in general several propellers. Needles to say these vehicles are complex and very expensive. And they are also difficult to operate as they are subject to currents of the sea. And further it is time consuming to submerge them and find the starting point of the touchdown point of the cable that is to be laid out.

The document WO 2010/105003 A2 discloses an unmanned apparatus for use in traversing and inspecting at least a portion of an elongated structure, the apparatus comprising sacrificial deployment weights made from concrete or other environmentally-friendly substance for buoyancy control.

### SHORT DESCRIPTION OF THE INVENTION

In order to solve at least some of the problems with the above mentioned prior art it is suggested an underwater device according to claim 1.

The underwater device has several advantages over the prior art. First of all it uses the cable to be laid out itself for movement and guidance. I.e. the device travels down the cable to be laid out and then reaches the touchdown point in a very precise and accurate manner.

The device is preferably having rolls for movement along the cable. The rolls are energy efficient in particular more efficient than use of only propellers.

The device can as complement is provided with a propeller. This propeller is only intended to be used when the device for example needs to move forward due to obstacles in the form of joints of the cable or the like. And therefore the device is very energy efficient. And in a further development the device needs no energy at all almost to reach the touchdown point of the cable. As it can travel along the cable having buoyancy that is adapted such at the device travels downwards. And then the buoyancy can be adjusted to a slightly positive value for performing the normal operation of the device close the touchdown point.

### List of Drawings

- Figure 1,: discloses a device according to the invention

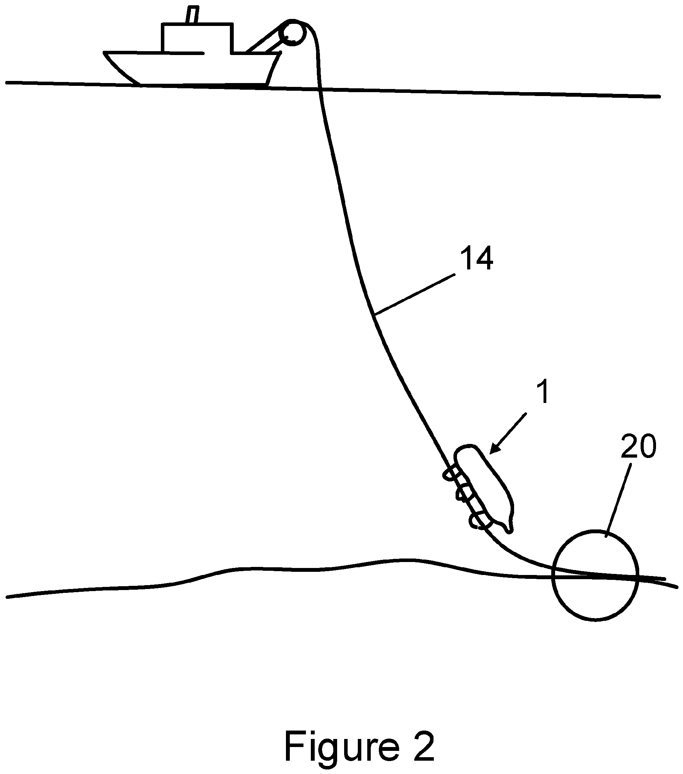

- Figure 2,: discloses the operation of a device according to the invention.

### DETAILED DESCRIPTION

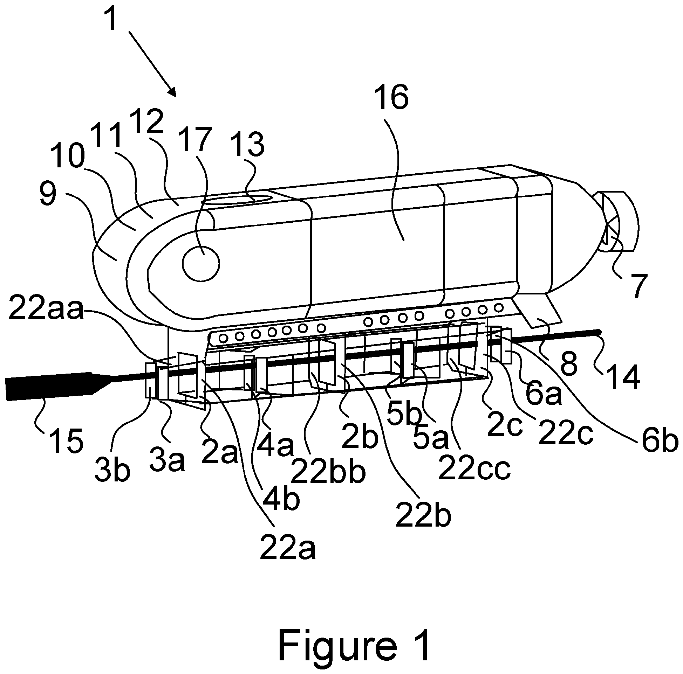

The present invention relates in general to a device 1 as disclosed in figure 1. The device has a housing 16. The device is further arranged with guiding and movement means. The guiding means 2a, 22a, 2b, 22b, 2c, 22c, are shown in pairs. The guiding means is in the form of pairs having a claw like configuration. A first claw 2a can thus pivot towards a second claw 22a, and thereby form a through hole that is essentially larger than a cable 14 that is to be laid out. The inside of the claws of the guiding means is provided with friction lowering means, preferably in the form of rolls. Other means is thinkable as for example surfaces of PTFE plastics or the like. Or combinations of rolls and slide surfaces for that matter.

The device 1 comprises also an energy source, preferably in the form of a battery for providing electricity.

Figure 1 also discloses the first means 5a, 5b for movement of the device. These means are to the contrary to the prior art not constituted of propellers or any other water displacement device. Instead it comprises a roll 5a that is motorised. The roll is preferably motorised by means of a brushless motor. The roll 5a is preferably arranged in a pair with a facing roll 5b. Both rolls 5a, 5b is suspended such that they can clamp the cable 14, in doing that the device 1 can be moved along the cable.

The device further comprises a slip means 4a. The slip means 4a is preferably in the form of a roll that has a sensor that can determine the angular velocity of the roll when it rolls along the cable. In doing that the device 1 is arranged such that it can compare the angular velocity of the first movement means 5a, 5b with the slip means 4a and if a difference occurs it can determine that the first movement device is actually slipping. The slip means 4a is preferably associated with a second slip means 4b, preferably i the form of a roll, that can interact with the slip means 4a for clamping the cable. The slip means 4a, 4b can also comprise a motor, such that the slip means can be used for movement of the device 1 if for example the first means 5a, 5b for movement of the device has a break down or the like.

The underwater device 1 is also equipped with a first sensing means 3a. This sensing means 3a, can determine that cable that is followed by the device has a section 15 with a larger diameter than the main length of the cable 14. The sensing means is preferably a roll 3a. If said roll is moved in the radial direction by a section with a larger diameter 15, it can sens this by means of a sensor for example a potentiometer arrangement and thereby the device can take action in order to clear this section 15. The first sensing means 3a, is preferably arranged together with a facing roll 3b.

In general the device 1 is arranged with a control unit 17. The control unit 17 is arranged to control the device 1. For example it can when the first sensing means 3a senses that a larger diameter joint 15 of a cable arrives, loosen the first movement device 5a, 5b and the slip means 4a, 4b from the cable and then use a second movement device 7 in the form of a propeller to move over the joint. And thereafter continue its operation without using the propeller 7 for moving the device 1.

The device comprises a tank for pressurised gas. And a negative buoyancy tank for being able to alter the buoyancy of the device 1. The device 1 is when submerged along the cable in a heavy mode where it travels downwards by means of gravity through water injected in the negative buoyancy tank. Then when reach the appropriate dept the buoyancy of the device is altered by removing water from the negative buoyancy tank by injecting pressurized gas in form of air or nitrogen for example. Preferably the device has a buoyancy that higher than the gravity force, such that it stays in a preferred position on the cable.

When raising from the bottom at when finishing operation, also the housing 16 of the device can be filled with gas/fluid that further increases the buoyancy, thus it the travels up to the surface essentially without consuming energy.

The device is further provided with sensors for altitude over the bottom 9, 10, and angle of attack 11 and dept 12. The altitude sensors is preferably echo sound sensors. The dept sensor preferably a pressure sensor.

The device 1 is further provided with a beacon 13 for sending out signals to a receiver. The receiver is preferably situated on a boat and by means of the signal the position of the device is determined. And in consequence the touchdown point 20 of the cable is also determined.

## Claims

1. Underwater device (1) for position determination of cables that are laid out at sea, comprising
- a housing (16) having a tank therein,
- a guide means (2a, 2b, 2c) for guiding said underwater device (1) positioned outside said housing (16),
- a first means (5a, 5b)) for movement of said device (1) comprising at least one roll (5a), also positioned outside said housing,
- a second means (7) for movement of said device (1), positioned outside said housing
wherein said guide means (2a, 2b, 2c) is arranged such that it can guide the device by means of physical interaction with a cable to be laid out at sea, preferably by at least partly enclosing said cable
wherein the device is arranged such that it can send out a signal such that the position of the device can be determined,
wherein the guide means (2a, 2b, 2c) comprises two elements (22a, 22aa;22b, 22bb; 22c, 22cc) that are pivotally attached indirectly or directly to said housing (16), such that the two elements ((22a, 22aa;22b, 22bb; 22c, 22cc) can essentially form a through hole, through which a cable can extend,
wherein the device is arranged such that it can regulate the buoyancy of the device, by injecting water into said tank within the housing, and remove water from said tank by injecting compressed fluid to it such as air or nitrogen.

2. Underwater device (1) according to claim 1 wherein said guide means (2a, 2b, 2c) is arranged such that they can guide said underwater device at a state when the buoyancy of the underwater device is larger than its weight of the underwater device, preferably by means of rolls arranged in positions closest to where a cable would touch the guiding device when in use.

3. Underwater device (1) according to any of the claims 1 or 2, wherein the at least one roll (5a) the first means (5a, 5b) for movement of the device (1) comprises at least one motor for interacting with a cable for movement of the device.

4. Underwater device (1) according to claim 3, wherein the roll (5a) comprises a brushless motor.

5. Underwater device (1) according to claim 4, wherein the device comprises a second roll (5b) that is motorised or not motorised, in pair with the first roll, wherein the rolls (5a,5b) can by means of their suspension to the device (1) can be moved towards and from each other for clamping and releasing a cable.

6. Underwater device (1) according to any of the claims above wherein the device (1) comprises a slip means (4) for determination of the function of the first means for movement (5a, 5b).

7. Underwater device (1) according to claim 6 wherein said slip means (4a, 4b) comprises at least one roll, wherein said roll (4a) comprises a sensor for determining the angular velocity of the roll (4a).

8. Underwater device (1) according to claim 7 wherein the device (1) is arranged to be able to compare the angular velocity of roll of the slip means (4a, 4b) with an output from the first means of movement and thereby determine whether the roll or rolls of first means of movement (5a, 5b) is rotating at a different speed that the slip means (4a, 4b).

9. Underwater device (1) according to claim 8 wherein the slip means (4) comprises a motor such that in the event that a failure of the first movement device (5a, 5b) occur the slip means can be used as a movement means.

10. Under water device (1) according to any of the claims above wherein the device further is equipped with a first sensing means (3a, 3b) for determining that a cable (14) that is followed by the device (1) has section (15) with a larger diameter than the main length of the cable (14), preferably said means (3a, 3b) comprises a roll (3a) that follows said cable (14) and a signal generating means associated with said roll indicates when said roll (3a, 3b) is being deflected in a radial direction from a cable (14).

11. Under water device (1) according to any of the claims above, wherein the second means for movement of said device (1) comprises a propeller (7).

12. Under water device (1) according to any of the claims above wherein the device (1) is arranged such that it can open all means that attaches the device to a cable, thereby completely releasing the device from the cable.

13. Under water device (1) according to any of the claims above, wherein the device is arranged such that it can for when returning to the surface after under water operation, can increase the buoyancy by introducing compressed fluid into the housing itself of the device.

14. Under water device (1) according to any of the claims above, wherein the device comprises an onboard control unit (17).

## Patentansprüche

1. Unterwasservorrichtung (1) zur Positionsbestimmung von auf See ausgelegten Leitungen, umfassend
- ein Gehäuse (16) mit einem Tank darin,
- ein Führungsmittel (2a, 2b, 2c) zum Führen der Unterwasservorrichtung (1), das außerhalb des Gehäuses (16) platziert ist,
- ein erstes Mittel (5a, 5b) zur Bewegung der Vorrichtung (1), umfassend mindestens eine Rolle (5a), das auch außerhalb des Gehäuses platziert ist,
- ein zweites Mittel (7) zur Bewegung der Vorrichtung (1), das außerhalb des Gehäuses platziert ist,
wobei das Führungsmittel (2a, 2b, 2c) so angeordnet ist, dass es die Vorrichtung durch physische Wechselwirkung mit einer auf See zu verlegenden Leitung führen kann, bevorzugt durch mindestens teilweises Einschließen der Leitung,
wobei die Vorrichtung so angeordnet ist, dass sie ein Signal aussenden kann, so dass die Position der Vorrichtung bestimmt werden kann,
wobei das Führungsmittel (2a, 2b, 2c) zwei Elemente (22a, 22aa;22b, 22bb; 22c, 22cc) umfasst, die indirekt oder direkt drehbar am Gehäuse (16) befestigt sind, so dass die zwei Elemente (22a, 22aa;22b, 22bb; 22c, 22cc) im Wesentlichen ein Durchgangsloch bilden können, durch welches sich eine Leitung erstrecken kann,
wobei die Vorrichtung so angeordnet ist, dass sie den Auftrieb der Vorrichtung durch Injizieren von Wasser in den Tank innerhalb des Gehäuses, und Entfernen von Wasser aus dem Tank durch Injizieren von komprimiertem Fluid, wie beispielsweise Luft oder Stickstoff dorthinein, regulieren kann.

2. Unterwasservorrichtung (1) nach Anspruch 1, wobei das Führungsmittel (2a, 2b, 2c) so angeordnet ist, dass sie die Unterwasservorrichtung in einen Zustand führen können, in dem der Auftrieb der Unterwasservorrichtung größer ist als deren Gewicht der Unterwasservorrichtung, vorzugsweise durch Rollen, die an Positionen angeordnet sind, die dort am nächsten sind, wo eine Leitung die Führungsvorrichtung unter Verwendung berühren würde.

3. Unterwasservorrichtung (1) nach einem der Ansprüche 1 oder 2, wobei die mindestens eine Rolle (5a) des ersten Mittels (5a, 5b) zur Bewegung der Vorrichtung (1) mindestens einen Motor zur Wechselwirkung mit einer Leitung zur Bewegung der Vorrichtung umfasst.

4. Unterwasservorrichtung (1) nach Anspruch 3, wobei die Rolle (5a) einen bürstenlosen Motor umfasst.

5. Unterwasservorrichtung (1) nach Anspruch 4, wobei die Vorrichtung eine zweite Rolle (5b) umfasst, die motorisiert oder nicht motorisiert ist, paarweise mit der ersten Rolle, wobei die Rollen (5a,5b) durch ihre Aufhängung an der Vorrichtung (1) zueinander oder voneinander weg bewegt werden können, um die Leitung zu verriegeln oder freizugeben.

6. Unterwasservorrichtung (1) nach einem der vorhergehenden Ansprüche, wobei die Vorrichtung (1) ein Gleitemittel (4) zum Bestimmen der Funktion des ersten Mittels zur Bewegung (5a, 5b) umfasst.

7. Unterwasservorrichtung (1) nach Anspruch 6, wobei das Gleitemittel (4a, 4b) zumindest eine Rolle umfasst, wobei die Rolle (4a) einen Sensor zum Bestimmen der Winkelgeschwindigkeit der Rolle (4a) umfasst.

8. Unterwasservorrichtung (1) nach Anspruch 7, wobei die Vorrichtung (1) so angeordnet ist, dass sie die Winkelgeschwindigkeit der Rolle des Gleitemittels (4a, 4b) mit einer Ausgabe des ersten Mittels der Bewegung vergleichen kann, und dadurch bestimmen kann, ob die Rolle(n) des ersten Mittels zur Bewegung (5a, 5b) mit einer anderen Geschwindigkeit rotiert, als das Gleitemittel (4a, 4b).

9. Unterwasservorrichtung (1) nach Anspruch 8 wobei das Gleitemittel (4) einen Motor umfasst, so dass im Falle eines Versagens der ersten Bewegungsvorrichtung (5a, 5b) das Gleitemittel als Bewegungsmittel verwendet werden kann.

10. Unterwasservorrichtung (1) nach einem der vorhergehenden Ansprüche, wobei die Vorrichtung ferner ausgestattet ist mit einem ersten Abfühlmittel (3a, 3b) zum Bestimmen, dass eine Leitung (14), der die Vorrichtung (1) folgt, einen Abschnitt (15) mit einem größeren Durchmesser als die Hauptlänge der Leitung (14) hat, wobei die Mittel (3a, 3b) vorzugsweise eine Rolle (3a) umfassen, die der Leitung (14) folgt, und ein Signalerzeugungsmittel, das mit der Rolle verbunden ist, anzeigt, wenn die Rolle (3a, 3b) in eine radiale Richtung von einer Leitung (14) abgebogen ist.

11. Unterwasservorrichtung (1) nach einem der vorhergehenden Ansprüche, wobei das zweite Mittel zur Bewegung der Vorrichtung (1) einen Propeller (7) umfasst.

12. Unterwasservorrichtung (1) nach einem der vorhergehenden Ansprüche wobei die Vorrichtung (1) so angeordnet ist, dass sie alle Mittel öffnen kann, die die Vorrichtung an einer Leitung befestigen, wodurch die Vorrichtung vollständig von der Leitung freigegeben wird.

13. Unterwasservorrichtung (1) nach einem der vorhergehenden Ansprüche, wobei die Vorrichtung so angeordnet ist, dass sie zum Zurückkehren nach einer Unterwasseroperation an die Oberfläche den Auftrieb steigern kann, durch das Einführen von komprimiertem Fluid in das Gehäuse der Vorrichtung selbst.

14. Unterwasservorrichtung (1) nach einem der vorhergehenden Ansprüche, wobei die Vorrichtung eine Bordsteuereinheit (17) umfasst.

## Revendications

1. Dispositif sous-marin (1) pour la détermination de la position de câbles posés en mer, comprenant
- un boîtier (16) comportant un réservoir à l'intérieur de celui-ci,
- un moyen de guidage (2a, 2b, 2c) pour guider ledit dispositif sous-marin (1) positionné à l'extérieur dudit boîtier (16),
- un premier moyen (5a, 5b) de déplacement dudit dispositif (1) comprenant au moins un rouleau (5a), également positionné à l'extérieur dudit logement,
- un deuxième moyen (7) de déplacement dudit dispositif (1), positionné à l'extérieur dudit boîtier,
dans lequel ledit moyen de guidage (2a, 2b, 2c) est agencé de manière à pouvoir guider le dispositif par interaction physique avec un câble à poser en mer, de préférence en entourant au moins partiellement ledit câble,
dans lequel le dispositif est conçu pour pouvoir émettre un signal permettant de déterminer la position du dispositif,
dans lequel le moyen de guidage (2a, 2b, 2c) comprend deux éléments (22a, 22aa;22b, 22bb; 22c, 22cc) qui sont fixés de manière pivotante indirectement ou directement au boîtier (16) de sorte que les deux éléments ((22a, 22aa; 22b, 22bb; 22c, 22cc) puissent former essentiellement un trou traversant, à travers lequel un câble peut s'étendre,
dans lequel le dispositif est conçu pour pouvoir réguler la flottabilité du dispositif en injectant de l'eau dans ledit réservoir situé à l'intérieur du boîtier, et éliminer l'eau dudit réservoir en injectant un fluide comprimé tel que l'air ou l'azote.

2. Dispositif sous-marin (1) selon la revendication 1, dans lequel ledit moyen de guidage (2a, 2b, 2c) est agencé si bien qu'il peut guider ledit dispositif sous-marin à un état où la flottabilité du dispositif sous-marin est supérieure à son poids du dispositif sous-marin, de préférence au moyen de rouleaux disposés dans les positions les plus proches de l'endroit où un câble toucherait le dispositif de guidage lors de son utilisation.

3. Dispositif sous-marin (1) selon l'une quelconque des revendications 1 ou 2, dans lequel l'au moins un rouleau (5a) du premier moyen (5a, 5b) pour déplacer le dispositif (1) comprend au moins un moteur pour interagir avec un câble pour le mouvement du dispositif.

4. Dispositif sous-marin (1) selon la revendication 3, dans lequel le rouleau (5a) comprend un moteur sans balai.

5. Dispositif sous-marin (1) selon la revendication 4, dans lequel le dispositif comprend un deuxième rouleau (5b) motorisé ou non motorisé, en paire avec le premier rouleau, les rouleaux (5a, 5b) pouvant, par leur suspension au dispositif (1) être déplacés vers et à l'écart l'un de l'autre pour serrer et libérer un câble.

6. Dispositif sous-marin (1) selon l'une quelconque des revendications précédentes, dans lequel le dispositif (1) comprend un moyen de glissement (4) pour déterminer la fonction du premier moyen de déplacement (5a, 5b).

7. Dispositif sous-marin (1) selon la revendication 6, dans lequel ledit moyen de glissement (4a, 4b) comprend au moins un rouleau, dans lequel ledit rouleau (4a) comprend un capteur pour déterminer la vitesse angulaire du rouleau (4a).

8. Dispositif sous-marin (1) selon la revendication 7, dans lequel le dispositif (1) est agencé pour pouvoir comparer la vitesse angulaire de rouleau du moyen de glissement (4a, 4b) avec une sortie du premier moyen de déplacement et déterminer ainsi si le ou les rouleaux du premier moyen de déplacement (5a, 5b) tournent à une vitesse différente de celle du moyen de glissement (4a, 4b).

9. Dispositif sous-marin (1) selon la revendication 8, dans lequel le moyen de glissement (4) comprend un moteur tel que dans le cas où une défaillance du premier dispositif de mouvement (5a, 5b) se produirait, le moyen de glissement peut être utilisé comme moyen de mouvement.

10. Dispositif sous-marin (1) selon l'une quelconque des revendications précédentes, dans lequel le dispositif est en outre équipé d'un premier moyen de détection (3a, 3b) pour déterminer qu'un câble (14) suivi du dispositif (1) présente une section (15) avec un diamètre supérieur à la longueur principale du câble (14), de préférence ledit moyen (3a, 3b) comprend un rouleau (3a) qui suit ledit câble (14) et un moyen générateur de signal associé audit rouleau indique quand ledit rouleau (3a, 3b) est dévié dans une direction radiale par rapport à un câble (14).

11. Dispositif sous-marin (1) selon l'une quelconque des revendications précédentes, dans lequel le deuxième moyen pour déplacer ledit dispositif (1) comprend une hélice (7).

12. Dispositif sous-marin (1) selon l'une quelconque des revendications précédentes, dans lequel le dispositif (1) est agencé de manière à pouvoir ouvrir tous les moyens permettant de connecter le dispositif à un câble, libérant ainsi complètement le dispositif du câble.

13. Dispositif sous-marin (1) selon l'une quelconque des revendications précédentes, dans lequel le dispositif est agencé de manière à pouvoir augmenter la flottabilité en revenant à la surface après une opération sous l'eau, en introduisant un fluide comprimé dans le boîtier même du dispositif.

14. Dispositif sous-marin (1) selon l'une quelconque des revendications précédentes, dans lequel le dispositif comprend une unité de commande embarquée (17).
